# FASCICULE DE BREVET EUROPEEN

(11) **EP 4 001 060 B1**
(45) Date de publication et mention de la délivrance du brevet: **30.08.2023**
(21) Numéro de dépôt: 21209896.6
(22) Date de dépôt: 23.11.2021
(51) Int. Cl.: B62D 21/15, B60R 19/34, B62D 25/08

(54) **STRUCTURE AVANT DE VEHICULE AUTOMOBILE A GESTION DE CHOC FRONTAL DE FAIBLE RECOUVREMENT**
FRONTSTRUKTUR EINES KRAFTFAHRZEUGS MIT FRONTALAUFPRALLSTEUERUNG MIT GERINGER ABDECKUNG
FRONT STRUCTURE OF A MOTOR VEHICLE WITH FRONTAL COLLISION MANAGEMENT WITH SMALL OVERLAP

(30) Priorité: 23.11.2020 FR 2011979
(43) Date de publication de la demande: 25.05.2022
(73) Titulaire: Renault s.a.s, 92100 Boulogne Billancourt (FR)
(72) Inventeur: LOUET, Dominique, 78084 GUYANCOURT CEDEX (FR); QUEVILLARD, Thomas, 78084 GUYANCOURT CEDEX (FR)
(74) Mandataire: Renault Group

(56) Documents cités:
- FR-A1- 3 078 047
- US-A1- 2012 086 225
- US-A1- 2016 332 588
- US-B1- 9 308 940
- US-B1- 9 415 735

## Description

L'invention a pour objet une structure avant de véhicule automobile à gestion de choc frontal de faible recouvrement.

Une structure avant de véhicule automobile comprend typiquement deux longerons formant un brancard et une poutre de pare-chocs reliée aux longerons, et un berceau situé sous le brancard, relié à ce dernier et conçu pour recevoir les liaisons fonctionnelles des organes du train avant et du groupe motopropulseur du véhicule. En général, un absorbeur de chocs, également appelé « crash-box » est situé entre les extrémités de chaque longeron et la poutre de pare-chocs afin de protéger la structure du brancard en cas de choc à faible vitesse. Les crash-box sont des pièces creuses déformables qui permettent d'absorber au moins en partie l'énergie d'un choc frontal. Toutefois, en cas de choc frontal à faible recouvrement, il peut arriver que l'obstacle déplace la roue, ce qui peut engendrer une intrusion à l'intérieur de l'habitacle.

Une première solution consiste à renforcer significativement la structure avant, ce qui n'est pas souhaitable car lourd et coûteux. Une autre solution, présentée dans le document FR3078047, consiste à réaliser une structure avant présentant une crash-box supplémentaire disposée latéralement de la crash-box située en avant du longeron et un déviateur formant butée monté sur une face latérale externe du longeron et situé en arrière de la crash-box supplémentaire. Ce déviateur est conçu pour transmettre les efforts reçus au longeron suivant une direction oblique et provoquer, sans s'écraser, une déformation du longeron engendrant une déviation du véhicule et de la roue. Le déviateur présente notamment une face avant destinée à recevoir les efforts en provenance de la crash-box et une face arrière moins large que la face avant suivant la direction transversale, les deux faces étant reliées par une face oblique. Le déviateur décrit dans ce document présente cependant une résistance suffisante pour ne pas s'écraser lors de la transmission des efforts : il ne permet donc pas de dissiper l'énergie.

Il existe donc un besoin pour une structure avant permettant de limiter davantage les sollicitations de l'habitacle lors d'un choc frontal à faible recouvrement, notamment à faible coût.

A cet effet, l'invention propose une structure avant de véhicule automobile présentant des directions longitudinale et transversale correspondant aux directions longitudinale et transversale du véhicule lorsque la structure avant est assemblée au véhicule, la structure avant comprenant un brancard comprenant deux longerons, une poutre transversale et deux absorbeurs de choc fixés chacun d'une part à l'extrémité avant d'un longeron dans le prolongement de celui-ci par l'intermédiaire d'une platine et d'autre part à la poutre transversale, caractérisée en ce que :
- au moins un absorbeur de choc est prolongé latéralement selon la direction transversale par une enveloppe à section transversale ouverte s'étendant d'un côté opposé à un côté en regard de l'autre absorbeur de choc, dont l'ouverture est fermée par assemblage à l'absorbeur de choc,
- un élément dissipateur d'énergie par déformation est associé à l'au moins un absorbeur de choc prolongé, cet élément dissipateur d'énergie étant monté sur une face latérale extérieure du longeron auquel est fixé l'absorbeur de choc prolongé, en alignement avec l'enveloppe de celui-ci selon la direction longitudinale.

L'enveloppe peut ainsi être ajoutée à l'absorbeur de choc d'une structure avant, sans nécessiter de modification de l'absorbeur de choc. Notamment, l'enveloppe vient prolonger l'absorbeur de choc transversalement vers l'extérieur de la structure avant. Ainsi, lors d'un choc à faible recouvrement, l'absorbeur de choc prolongé permet d'augmenter la surface de recouvrement entre la structure avant et l'obstacle, améliorant ainsi la dissipation de l'énergie à l'avant des longerons, l'élément dissipateur d'énergie situé en arrière de l'absorbeur de choc prolongé améliorant la dispersion et la diffusion de l'énergie du choc à l'intérieur du longeron.

Avantageusement, l'élément dissipateur d'énergie peut être formé de trois parois, deux parois latérales solidaires de la platine et de la face latérale extérieure du longeron et dressées par rapport à celle-ci, par exemple perpendiculaires ou sensiblement perpendiculaires, ces deux parois latérales étant reliées par une paroi inclinée située en regard de la face latérale extérieure du longeron et présentant une extrémité avant située à proximité de l'enveloppe de l'absorbeur de choc prolongé et distante de la face latérale extérieure du longeron et une extrémité arrière proche de cette face latérale extérieure.

L'élément dissipateur d'énergie peut ainsi être réalisé de manière simple. En outre, la paroi inclinée n'étant pas fixée à la platine ou au longeron, le montage de l'élément dissipateur d'énergie peut être réalisé rapidement.

Avantageusement, la paroi inclinée peut être fixée à distance de bords latéraux des parois latérales de l'élément de dissipation d'énergie, l'extrémité avant de la paroi inclinée étant adjacente à un bord extérieur de la platine distant du longeron, notamment en regard ou sensiblement en regard de la platine suivant la direction longitudinale, ce qui peut permettre une meilleure dispersion de l'énergie vers le longeron.

Avantageusement, la paroi inclinée peut être perpendiculaire ou sensiblement perpendiculaire aux parois latérales de l'élément de dissipation d'énergie, également pour une meilleure dispersion de l'énergie vers le longeron.

Avantageusement, la structure avant peut comprendre au moins un support solidaire du longeron supportant l'absorbeur de choc prolongé, ce support étant situé d'un côté du longeron en regard de l'autre longeron et en avant d'une roue avant du véhicule lorsque la structure avant est assemblée au véhicule, et l'élément dissipateur d'énergie peut s'étendre le long du longeron depuis la platine supportant l'absorbeur de choc prolongé jusqu'au support. Ce support est par exemple un support de boîtier de vitesse, disposé en général du côté conducteur, ou un élément de support de groupe motopropulseur. La présence de ce type de support rigidifie le longeron de sorte qu'en cas de choc, une déformation du longeron se produit en général au niveau de ce support. L'élément dissipateur d'énergie s'étendant jusqu'au support, la dissipation d'énergie au sein du longeron en cas de choc va favoriser la déformation du longeron au niveau du support et améliorer au global la dissipation de l'énergie au sein du longeron, réduisant ainsi les sollicitations subies par l'habitacle.

Avantageusement, l'enveloppe de l'absorbeur de choc prolongé peut être fixée à la poutre transversale du brancard et à la platine du longeron, ce qui peut améliorer ses performances.

Avantageusement, la structure avant peut comprendre une structure de berceau fixée sous le brancard lorsque la structure avant est assemblée au véhicule, cette structure de berceau comprenant deux longerons reliés par un élément transversal, chaque longeron de berceau présentant, à son extrémité avant, un absorbeur de choc de berceau. Au moins un absorbeur de choc de berceau peut alors être prolongé latéralement selon la direction transversale par une enveloppe à section transversale ouverte s'étendant d'un côté opposé à un côté en regard de l'autre absorbeur de choc de berceau, dont l'ouverture est fermée par assemblage à l'absorbeur de choc de berceau, l'au moins un absorbeur de choc de berceau prolongé étant situé du même côté de la structure avant que l'au moins un absorbeur de choc de brancard prolongé.

Cet agencement permet également d'augmenter le recouvrement entre un obstacle et la structure de berceau lors d'un choc frontal et d'améliorer ainsi la dispersion de l'énergie au sein du longeron du berceau.

Avantageusement, pour une meilleure absorption de l'énergie, les dimensions de chaque enveloppe d'absorbeur de choc prolongé, mesurées dans un plan transversal à la direction longitudinale, peuvent être plus grandes du côté d'une extrémité avant que du côté d'une extrémité arrière.

L'invention concerne enfin un véhicule comprenant une structure avant selon l'invention.

L'invention est maintenant décrite en référence aux dessins annexés, non limitatifs, dans lesquels :
[Fig. 1] La figure 1 représente une vue partielle en perspective d'une structure avant selon un mode de réalisation de l'invention.
[Fig. 2] La figure 2 représente une vue en coupe agrandie de la structure avant de la figure 1.
[Fig. 3] La figure 3 représente partiellement en perspective un absorbeur de choc prolongé par une enveloppe.
[Fig. 4] La figure 4 représente une vue en perspective agrandie d'un élément dissipateur d'énergie.

Dans la présente description, les termes avant, arrière, supérieur, inférieur, font référence aux directions avant et arrière, supérieure et inférieure du véhicule, lorsque la structure avant est assemblée au véhicule. Les axes X, Y, Z, correspondent respectivement à l'axe longitudinal (d'avant en arrière), transversal et vertical du véhicule, ce dernier reposant sur le sol. La direction verticale correspond ainsi à la direction de la gravité.

Par sensiblement parallèle, perpendiculaire ou à angle droit, on entend une direction/un angle s'écartant d'au plus ±20°, voire d'au plus ±10° ou d'au plus ±5° d'une direction/d'un plan parallèle, perpendiculaire ou d'un angle droit.

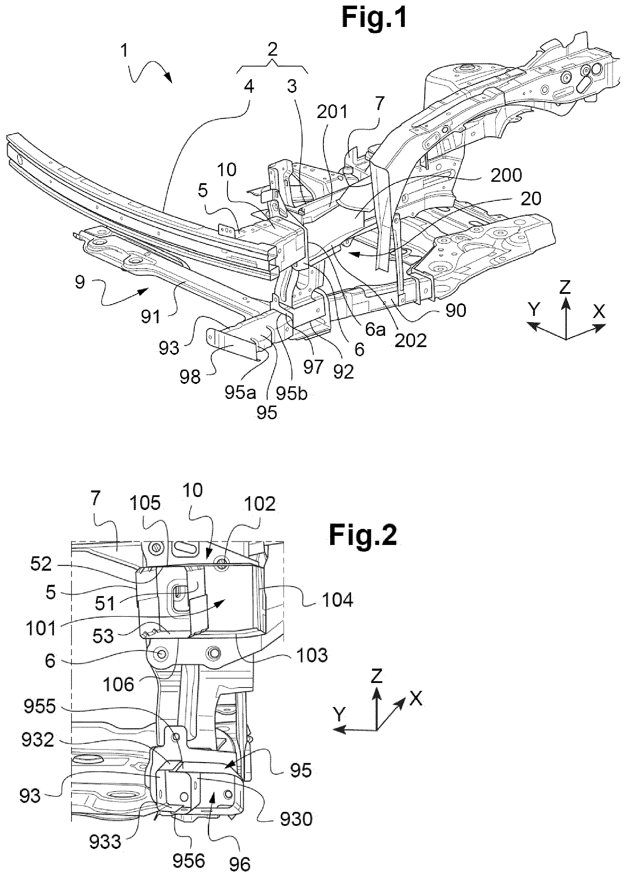

La figure 1 représente partiellement une structure avant 1 de véhicule automobile présentant une direction longitudinale correspondant à la direction longitudinale X du véhicule lorsque la structure avant est assemblée au véhicule. La structure avant 1 comprend de manière usuelle un brancard 2 comprenant deux longerons 3, une poutre transversale 4 et deux absorbeurs de choc 5 fixés chacun d'une part à l'extrémité avant d'un longeron 3 par l'intermédiaire d'une platine 6 et d'autre part à la poutre transversale 4. Chaque absorbeur de choc 5 s'étend dans le prolongement d'un longeron 3 suivant la direction longitudinale X. Les longerons 3 et absorbeurs de choc 5 sont ainsi disposés de part et d'autre de la structure avant 1 suivant sa direction transversale, qui correspond à la direction transversale Y du véhicule. Pour davantage de clarté, seule la partie gauche de la structure avant 1, à savoir le côté conducteur, est représenté figure 1.

Selon l'invention, un absorbeur de choc 5 est prolongé latéralement selon la direction transversale Y par une enveloppe 10 à section transversale ouverte, dont l'ouverture 101 est fermée par assemblage à l'absorbeur de choc 5. Cette enveloppe 10 est située d'un côté de l'absorbeur de choc 5 opposé à un côté en regard de l'autre absorbeur de choc 5. Autrement dit, suivant la direction transversale de la structure avant 1, l'enveloppe 10 n'est pas disposée entre les absorbeurs de choc 5, mais à l'extérieur de ceux-ci. Ainsi, l'enveloppe 10 élargit l'absorbeur de choc 5 vers l'extérieur de la structure avant suivant la direction transversale.

Avantageusement, de manière générale, les dimensions de l'enveloppe 10 de l'absorbeur de choc prolongé 5 mesurées dans un plan transversal (perpendiculaire à la direction longitudinale) peuvent être plus grandes d'un côté avant 100a de l'enveloppe que les dimensions d'un côté arrière 100b de l'enveloppe, ceci pour une meilleure transmission des efforts vers l'élément dissipateur d'énergie 20 décrit plus bas et au final vers le longeron 3.

Généralement, de manière usuelle, l'absorbeur de choc 5 est un corps creux, ouvert à ses deux extrémités suivant la direction longitudinale et présentant une section transversale fermée, par exemple de forme sensiblement rectangulaire tel que représenté ici. De manière usuelle, ce corps creux présente des plis 50 parallèles entre eux et s'étendant perpendiculairement ou sensiblement perpendiculairement à la direction longitudinale, à savoir la direction du choc à absorber. Ces plis 50 vont permettre l'écrasement de l'absorbeur de choc 5 suivant la direction longitudinale lors d'un choc frontal et l'absorption d'une partie de l'énergie résultant du choc.

L'homme du métier pourra avantageusement réaliser l'enveloppe 10 de sorte que son comportement en choc frontal soit similaire au comportement de l'absorbeur de choc 5.

Ainsi, de préférence, quelque soit le mode de réalisation, l'enveloppe 10 pourra également présenter des plis 107 parallèles entre eux s'étendant dans le prolongement des plis 50 de l'absorbeur de choc 5 lorsque l'enveloppe est assemblée à ce dernier. En outre, l'enveloppe 10 pourra être réalisée dans un matériau similaire à celui utilisé pour réaliser l'absorbeur de choc 5, à savoir un matériau métallique. L'assemblage des deux pièces peut ainsi être réalisé de manière simple par soudure.

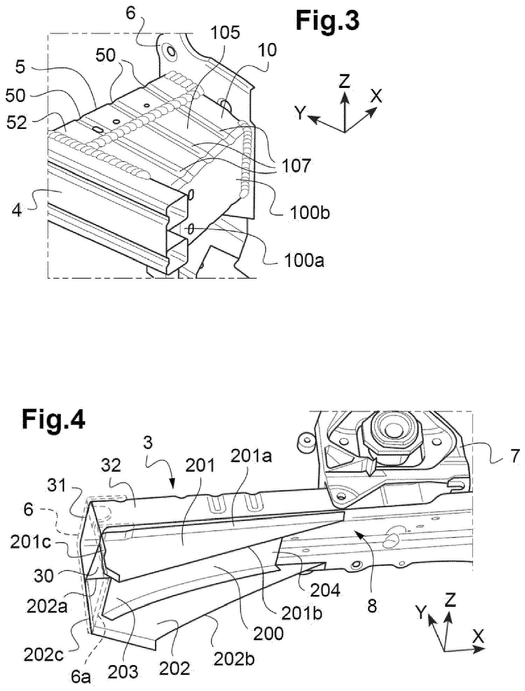

L'ouverture 101 de l'enveloppe 10 est dirigée en direction d'une paroi latérale verticale extérieure 51 de l'absorbeur de choc 5. Dans l'exemple, les bords latéraux 105, 106 de l'enveloppe viennent recouvrir respectivement les parois supérieure et inférieure 52, 53 de l'absorbeur de choc 5 auxquelles elles sont fixées, par exemple par soudure, tel que représenté figure 3. Tel que représenté sur cette figure, l'enveloppe 10 est également soudée ici à la platine 6 et à la poutre transversale 4, comme l'absorbeur de choc 5.

Dans l'exemple, l'enveloppe 10 présente une section transversale en forme de U couché dont les faces supérieure et inférieure 102, 103 sont reliées par une face latérale 104, ces faces supérieure et inférieure 102, 103 s'étendent ainsi dans le prolongement des parois supérieure et inférieure 52, 53 de l'absorbeur de choc 5 lorsque l'enveloppe 10 y est assemblée.

La structure avant 1 selon l'invention comprend également un élément 20 dissipateur d'énergie par déformation associé à l'absorbeur de choc prolongé 5. Cet élément 20 dissipateur d'énergie est monté sur une face latérale extérieure 30 du longeron, en alignement avec l'enveloppe 10 de l'absorbeur de choc prolongé 5 selon la direction longitudinale, tel que visible figure 1. Cet élément 20 est un élément dissipateur d'énergie par déformation : il doit donc pouvoir s'écraser lors d'un choc. A cet effet, avantageusement l'homme du métier ne choisira pas une pièce pleine pour cet élément, mais plutôt une forme creuse de section transversale ouverte ou fermée, de préférence de section ouverte. Toutefois, tel que représenté dans l'exemple, pour une réalisation et un assemblage plus simple, cet élément 20 dissipateur d'énergie peut être formé de trois parois 200, 201, 202 : deux parois latérales 201, 202 solidaires de la platine 6 et de la face latérale extérieure 30 du longeron et dressées par rapport à celle-ci, et une paroi inclinée 200 reliant ces deux parois latérales 201, 202. La paroi inclinée 200 est située en regard de la face latérale extérieure 30 du longeron et présente une extrémité avant 203 située à proximité de l'absorbeur de choc prolongé 5 et distante de la face latérale extérieure du longeron tandis que son extrémité arrière 204 est proche de cette face latérale extérieure 30, tel que visible plus clairement figure 4. Pour une réalisation plus simple, la paroi inclinée 200 est ici fixée à distance de bords latéraux 201a, 201b ; 202a, 202b des parois latérales de l'élément 20 de dissipation d'énergie. On notera ainsi que les parois latérales 201, 202 présentent une forme générale triangulaire ou quasiment triangulaire, leur bord avant 201c, 202c étant fixés à la platine 6. En outre, l'extrémité avant 203 de la paroi inclinée 200 est ici adjacente à un bord extérieur 6a de la platine distant du longeron, notamment en regard ou sensiblement en regard de la platine 6 suivant la direction longitudinale. Ce bord extérieur 6a s'étend sensiblement parallèlement à la face latérale extérieure 30 du longeron, à distance de ce dernier. Enfin, la paroi inclinée 200 s'étend perpendiculairement ou sensiblement perpendiculairement aux parois latérales 201, 202. Cette paroi inclinée s'étend aussi avantageusement sensiblement dans le prolongement de la paroi 104 de l'enveloppe 10, également inclinée du fait des dimensions différentes des côtés 100a et 100b de l'enveloppe. Ainsi, la section transversale de l'élément 20 dissipateur d'énergie est semblable à un H couché.

En général, l'élément 20 dissipateur d'énergie est un élément métallique qui pourra donc être fixé par soudure au longeron 3 et à la platine 6. A cet effet, les bords 201a-201c et 202a-202c des parois 201, 202 peuvent être repliés sensiblement à angle droit vers un côté opposé à la paroi inclinée 200 pour soudure sur le longeron 3 et la platine 6, tel que visible figure 4.

Tel que visible sur la figure 4, l'élément 20 dissipateur d'énergie s'étend le long du longeron 3 depuis la platine 6 supportant l'absorbeur de choc prolongé 5 jusqu'à un support 7 solidaire du longeron 3. Ce support 7 est fixé au longeron d'un côté de celui-ci en regard de l'autre longeron, et est situé en avant d'une roue avant du véhicule lorsque la structure avant 1 est assemblée au véhicule. Ce support 7 est en général solidaire d'une face latérale intérieure 31 du longeron et d'une face supérieure 32 du longeron.

Ainsi, lors d'un choc, un obstacle frontal, par exemple un mur, un autre véhicule ou autre, va exercer une force vers l'arrière sur l'absorbeur de choc 5 prolongé par l'enveloppe 10 qui vont absorber une partie de l'énergie du choc en se déformant et transmettre une partie de l'énergie du choc au longeron 3 et à l'élément 20 dissipateur d'énergie, induisant une déformation de l'élément 20 dissipateur d'énergie, qui à son tour va absorber une partie de l'énergie du choc, et une diffusion de l'énergie au longeron jusqu'à provoquer une déformation de ce dernier au niveau d'une zone 8 qui se comporte comme une rotule plastique : la partie du longeron en avant de la rotule plastique pivote alors par rapport au reste du longeron, ici vers l'intérieur de la structure avant. Cette zone 8 est située sensiblement au niveau du support 7, en avant de ce dernier. A titre d'exemple, l'élément 20 dissipateur d'énergie peut ainsi absorber entre 1 et 2 kilo Joules alors que le longeron 3 peut absorber entre 3 et 4 kilo Joules, soit une absorption totale de 4 à 6 kilo Joules pour la structure avant 1 selon l'invention.

Afin d'améliorer l'absorption d'énergie de la structure avant 1, un absorbeur de choc prolongé similaire à celui précédemment décrit peut être prévu au niveau du berceau lorsque la structure avant en est équipée.

Ainsi, dans l'exemple représenté, la structure avant 1 comporte une structure de berceau 9 fixée sous le brancard 2 lorsque la structure avant est assemblée au véhicule. Cette structure de berceau 9 comprend deux longerons 90 reliés par un élément transversal 91, chaque longeron de berceau 90 présentant, à son extrémité avant 92, un absorbeur de choc de berceau 93. L'absorbeur de choc de berceau 93 s'étend de manière usuelle dans le prolongement (suivant la direction longitudinale) du longeron de berceau 90. Sur la figure 1, seule la partie gauche du berceau 9 est représentée.

De manière similaire à l'absorbeur de choc prolongé 5 du brancard, l'un des absorbeurs de choc du berceau 93 peut être prolongé latéralement selon la direction transversale par une enveloppe 95 à section transversale ouverte s'étendant d'un côté de l'absorbeur de choc de berceau 93 opposé à un côté en regard de l'autre absorbeur de choc de berceau 93. Cette enveloppe 95 présente une ouverture 96 fermée par assemblage à l'absorbeur de choc de berceau 93. Cet absorbeur de choc de berceau prolongé 93 est en outre situé du même côté de la structure avant 1 que l'absorbeur de choc de brancard prolongé 5 précédemment décrit.

L'enveloppe 95 de l'absorbeur de choc de berceau 93 prolongé pourra également être réalisée dans un matériau similaire à celui utilisé pour réaliser l'absorbeur de choc de berceau 93, à savoir un matériau métallique.

Généralement, de manière usuelle et semblable à ce qui a été décrit précédemment, l'absorbeur de choc de berceau 93 est un corps creux, ouvert à ses deux extrémités suivant la direction longitudinale et présentant une section transversale fermée, ici de forme sensiblement rectangulaire. De manière usuelle, ce corps creux présente des plis parallèles entre eux et s'étendant perpendiculairement ou sensiblement perpendiculairement à la direction longitudinale.

De préférence, quelque soit le mode de réalisation, l'enveloppe 95 pourra également présenter des plis parallèles entre eux s'étendant dans le prolongement des plis de l'absorbeur de choc de berceau 93 lorsque l'enveloppe 95 est assemblée à ce dernier. Ainsi, l'assemblage formé de l'absorbeur de choc de berceau 93 et de l'enveloppe 95 est tout à fait semblable à l'assemblage de l'absorbeur de choc de brancard 5 et de l'enveloppe 10 précédemment décrit en référence aux figures 2 et 3.

Du fait de sa position, l'ouverture 96 de l'enveloppe 95 est ainsi dirigée en direction d'une paroi latérale verticale 930 de l'absorbeur de choc de berceau 93. Dans l'exemple, les bords latéraux 955, 956 de l'enveloppe 95 viennent recouvrir respectivement les parois supérieure et inférieure 932, 933 de l'absorbeur de choc de berceau 93 auxquelles elles sont fixées, par exemple par soudure. L'absorbeur de choc de berceau 93 et l'enveloppe 95 sont fixés au longeron de berceau 90 via une platine 97, et leur extrémité avant est solidaire d'une autre platine 98.

Par ailleurs, comme pour l'absorbeur de choc prolongé du brancard, l'enveloppe 95 fixée à l'absorbeur de choc de berceau 95 pourra présenter des dimensions, mesurées dans un plan transversal à la direction longitudinale, plus grandes du côté d'une extrémité avant 95a que du côté d'une extrémité arrière 95b.

Dans l'exemple précédemment décrit, un seul absorbeur de choc de brancard prolongé par une enveloppe et un seul absorbeur de choc de berceau prolongé par une enveloppe sont prévus d'un même côté de la structure avant, ici du côté conducteur du véhicule. L'invention n'est toutefois pas limitée à ce mode de réalisation, et un deuxième absorbeur de choc de brancard prolongé par une enveloppe, associé à un autre élément dissipateur d'énergie, de même qu'un deuxième absorbeur de choc de berceau prolongé par une enveloppe peuvent être prévus de l'autre côté de la structure avant, avec des caractéristiques similaires à celles précédemment décrites. Le support 7 au niveau duquel se trouve la rotule plastique 8 du longeron 3 sert alors à la fixation d'un autre élément qu'un boîtier de vitesse. Il peut par exemple s'agir d'un support de groupe motopropulseur ou d'un autre élément du véhicule.

## Revendications

1. Structure avant (1) de véhicule automobile présentant des directions longitudinale et transversale correspondant aux directions longitudinale et transversale du véhicule lorsque la structure avant est assemblée au véhicule, la structure avant comprenant un brancard (2) comprenant deux longerons (3), une poutre transversale (4) et deux absorbeurs de choc (5) fixés chacun d'une part à l'extrémité avant d'un longeron (3) dans le prolongement de celui-ci par l'intermédiaire d'une platine (6) et d'autre part à la poutre transversale (4), **caractérisée en ce que** :
- au moins un absorbeur de choc (5) est prolongé latéralement selon la direction transversale par une enveloppe (10) à section transversale ouverte s'étendant d'un côté opposé à un côté en regard de l'autre absorbeur de choc, dont l'ouverture (101) est fermée par assemblage à l'absorbeur de choc (5),
- un élément (20) dissipateur d'énergie par déformation est associé à l'au moins un absorbeur de choc (5) prolongé, cet élément (20) dissipateur d'énergie étant monté sur une face latérale extérieure (30) du longeron (3) auquel est fixé l'absorbeur de choc prolongé, en alignement avec l'enveloppe de celui-ci selon la direction longitudinale.

2. Structure avant (1) selon la revendication 1, **caractérisée en ce que** l'élément (20) dissipateur d'énergie est formé de trois parois, deux parois latérales (201, 202) solidaires de la platine (6) et de la face latérale extérieure (30) du longeron et dressées par rapport à celle-ci, ces deux parois latérales (201, 202) étant reliées par une paroi inclinée (200) située en regard de la face latérale extérieure (30) du longeron et présentant une extrémité avant (203) située à proximité de l'enveloppe de l'absorbeur de choc prolongé et distante de la face latérale extérieure (30) du longeron et une extrémité arrière (204) proche de cette face latérale extérieure (30).

3. Structure avant (1) selon la revendication 2, **caractérisée en ce que** la paroi inclinée (200) est fixée à distance de bords latéraux (201a, 201b ; 202a, 202b) des parois latérales de l'élément de dissipation d'énergie, l'extrémité avant (203) de la paroi inclinée étant adjacente à un bord extérieur (6a) de la platine distant du longeron.

4. Structure avant (1) selon la revendication 2 ou 3, **caractérisée en ce que** la paroi inclinée (200) est perpendiculaire ou sensiblement perpendiculaire aux parois latérales (201, 202) de l'élément de dissipation d'énergie.

5. Structure avant (1) selon l'une quelconque des revendications 1 à 4, **caractérisée en ce qu'**elle comprend au moins un support (7) solidaire du longeron (3) supportant l'au moins un absorbeur de choc (5) prolongé, ce support étant situé d'un côté du longeron en regard de l'autre longeron et en avant d'une roue avant du véhicule lorsque la structure avant est assemblée au véhicule, et **en ce que** l'élément (20) dissipateur d'énergie s'étend le long du longeron (3) depuis la platine (6) supportant l'absorbeur de choc prolongé (5) jusqu'au support (7).

6. Structure avant (1) selon l'une quelconque des revendications 1 à 5, **caractérisée en ce que** l'enveloppe (10) de l'absorbeur de choc prolongé (5) est fixée à la poutre transversale (4) du brancard et à la platine (6) du longeron.

7. Structure avant (1) selon l'une quelconque des revendications 1 à 6 comprenant en outre une structure de berceau (9) fixée sous le brancard (2) lorsque la structure avant est assemblée au véhicule, cette structure de berceau comprenant deux longerons (90) reliés par un élément transversal (91), chaque longeron de berceau (90) présentant, à son extrémité avant (92), un absorbeur de choc de berceau (93), **caractérisée en ce qu'**au moins un absorbeur de choc de berceau est prolongé latéralement selon la direction transversale par une enveloppe (95) à section transversale ouverte s'étendant d'un côté opposé à un côté en regard de l'autre absorbeur de choc de berceau, dont l'ouverture (96) est fermée par assemblage à l'absorbeur de choc de berceau (93), l'au moins un absorbeur de choc de berceau prolongé (93) étant situé du même côté de la structure avant que l'au moins un absorbeur de choc de brancard prolongé (5).

8. Structure avant (1) selon l'une quelconque des revendications 1 à 7, **caractérisé en ce que** les dimensions de chaque enveloppe (10, 95) d'absorbeur de choc prolongé, mesurées dans un plan transversal à la direction longitudinale, sont plus grandes du côté d'une extrémité avant que du côté d'une extrémité arrière.

9. Véhicule automobile comprenant une structure avant (1) selon l'une quelconque des revendications précédentes.

## Patentansprüche

1. Frontstruktur (1) eines Kraftfahrzeugs, die eine Längs- und eine Querrichtung aufweist, die der Längs- bzw. Querrichtung des Fahrzeugs entsprechen, wenn die Frontstruktur mit dem Fahrzeug verbunden ist, wobei die Frontstruktur ein Tragelement (2) umfasst, das zwei Längsträger (3), einen Querträger (4) und zwei Stoßdämpfer (5) umfasst, die jeweils einerseits mittels einer Platte (6) am vorderen Ende eines Längsträgers (3) in der Verlängerung desselben und andererseits am Querträger (4) befestigt sind, **dadurch gekennzeichnet, dass**:
- mindestens ein Stoßdämpfer (5) seitlich in Querrichtung durch eine Hülle (10) mit offenem Querschnitt verlängert wird, die sich von einer Seite erstreckt, die einer dem anderen Stoßdämpfer zugewandten Seite gegenüberliegt, wobei die Öffnung (101) durch Verbinden mit dem Stoßdämpfer (5) geschlossen wird,
- ein Element (20), das durch Verformung Energie abführt, mit dem mindestens einen verlängerten Stoßdämpfer (5) verbunden ist, wobei dieses Energieabführungselement (20) an einer äußeren Seitenfläche (30) des Längsträgers (3), an dem der verlängerte Stoßdämpfer befestigt ist, in Ausrichtung mit dessen Hülle in der Längsrichtung befestigt ist.

2. Frontstruktur (1) nach Anspruch 1, **dadurch gekennzeichnet, dass** das Energieabführungselement (20) aus drei Wänden gebildet ist, wobei zwei Seitenwände (201, 202) fest mit der Platte (6) und der äußeren Seitenfläche (30) des Längsträgers verbunden und in Bezug auf diese aufgerichtet sind, wobei die beiden Seitenwände (201, 202) durch eine geneigte Wand (200) verbunden sind, die sich gegenüber der äußeren Seitenfläche (30) des Längsträgers erstreckt und ein vorderes Ende (203), das sich in der Nähe der Hülle des verlängerten Stoßdämpfers befindet und von der äußeren Seitenfläche (30) des Längsträgers beabstandet ist, und ein hinteres Ende (204), das sich in der Nähe dieser äußeren Seitenfläche (30) befindet, aufweist.

3. Frontstruktur (1) nach Anspruch 2, **dadurch gekennzeichnet, dass** die geneigte Wand (200) in einem Abstand zu den Seitenkanten (201a, 201b; 202a, 202b) der Seitenwände des Energieabführungselements befestigt ist, wobei das vordere Ende (203) der geneigten Wand an eine Außenkante (6a) der Platte entfernt vom Längsträger angrenzt.

4. Frontstruktur (1) nach Anspruch 2 oder 3, **dadurch gekennzeichnet, dass** die geneigte Wand (200) senkrecht oder im Wesentlichen senkrecht zu den Seitenwänden (201, 202) des Energieabführungselements verläuft.

5. Frontstruktur (1) nach einem der Ansprüche 1 bis 4, **dadurch gekennzeichnet, dass** sie mindestens eine Halterung (7) umfasst, die fest mit dem Längsträger (3) verbunden ist, der den mindestens einen verlängerten Stoßdämpfer (5) trägt, wobei sich die Halterung auf einer Seite des Längsträgers gegenüber dem anderen Längsträger und vor einem Vorderrad des Fahrzeugs erstreckt, wenn die Frontstruktur mit dem Fahrzeug verbunden ist, und dass sich das Energieabführungselement (20) entlang des Längsträgers (3) von der Platte (6), die den verlängerten Stoßdämpfer (5) trägt, bis zur Halterung (7) erstreckt.

6. Frontstruktur (1) nach einem der Ansprüche 1 bis 5, **dadurch gekennzeichnet, dass** die Hülle (10) des verlängerten Stoßdämpfers (5) am Querträger (4) des Tragelements und an der Platte (6) des Längsträgers befestigt ist.

7. Frontstruktur (1) nach einem der Ansprüche 1 bis 6, ferner umfassend eine Rahmenstruktur (9), die unter dem Tragelement (2) befestigt ist, wenn die Frontstruktur mit dem Fahrzeug verbunden ist, wobei die Rahmenstruktur zwei Längsträger (90) umfasst, die durch ein Querelement (91) verbunden sind, wobei jeder Rahmenlängsträger (90) an seinem vorderen Ende (92) einen Rahmenstoßdämpfer (93) aufweist, **dadurch gekennzeichnet, dass** mindestens ein Rahmenstoßdämpfer seitlich in Querrichtung durch eine Hülle (95) mit offenem Querschnitt verlängert ist, die sich von einer Seite erstreckt, die einer dem anderen Rahmenstoßdämpfer zugewandten Seite gegenüberliegt, wobei die Öffnung (96) durch Verbindung mit dem Rahmenstoßdämpfer (93) geschlossen wird, wobei sich der mindestens eine verlängerte Rahmenstoßdämpfer (93) auf derselben Seite der Frontstruktur wie der mindestens eine verlängerte Stoßdämpfer (5) des Tragelements befindet.

8. Frontstruktur (1) nach einem der Ansprüche 1 bis 7, **dadurch gekennzeichnet, dass** die Abmessungen jeder Hülle (10, 95) eines verlängerten Stoßdämpfers, gemessen in einer zur Längsrichtung quer verlaufenden Ebene, auf der Seite eines vorderen Endes größer als auf der Seite eines hinteren Endes sind.

9. Kraftfahrzeug, umfassend eine Frontstruktur (1) nach einem der vorangehenden Ansprüche.

## Claims

1. Front structure (1) of a motor vehicle having longitudinal and transverse directions corresponding to the longitudinal and transverse directions of the vehicle when the front structure is assembled on the vehicle, the front structure comprising a stretcher (2) comprising two side rails (3), a transverse beam (4) and two shock absorbers (5) each fixed on one side to the front end of a side rail (3) in the extension thereof via a plate (6) and on the other side to the transverse beam (4), **characterized in that**:
- at least one shock absorber (5) is extended laterally in the transverse direction by an outer cover (10) with open cross-section extending from an opposite side to a side facing the other shock absorber, the opening (101) of which is closed by assembly with the shock absorber (5),
- a deformation-based energy dissipating element (20) is associated with the at least one extended shock absorber (5), this energy dissipating element (20) being mounted on an outer lateral face (30) of the side rail (3) to which the extended shock absorber is fixed, in alignment with the outer cover thereof in the longitudinal direction.

2. Front structure (1) according to Claim 1, **characterized in that** the energy dissipating element (20) is formed by three walls, two lateral walls (201, 202) secured to the plate (6) and the outer lateral face (30) of the side rail and trimmed with respect thereto, these two lateral walls (201, 202) being linked by an inclined wall (200) situated facing the outer lateral face (30) of the side rail and having a front end (203) situated in proximity to the outer cover of the extended shock absorber and away from the outer lateral face (30) of the side rail and a rear end (204) close to that outer lateral face (30).

3. Front structure (1) according to Claim 2, **characterized in that** the inclined wall (200) is fixed at a distance from lateral edges (201a, 201b; 202a, 202b) of the lateral walls of the energy dissipating element, the front end (203) of the inclined wall being adjacent to an outer edge (6a) of the plate away from the side rail.

4. Front structure (1) according to Claim 2 or 3, **characterized in that** the inclined wall (200) is at right angles or substantially at right angles to the lateral walls (201, 202) of the energy dissipating element.

5. Front structure (1) according to any one of Claims 1 to 4, **characterized in that** it comprises at least one support (7) secured to the side rail (3) supporting the at least one extended shock absorber (5), this support being situated on a side of the side rail facing the other side rail and in front of a front wheel of the vehicle when the front structure is assembled on the vehicle, and **in that** the energy dissipating element (20) extends along the side rail (3) from the plate (6) supporting the extended shock absorber (5) to the support (7).

6. Front structure (1) according to any one of Claims 1 to 5, **characterized in that** the outer cover (10) of the extended shock absorber (5) is fixed to the transverse beam (4) of the stretcher and to the plate (6) of the side rail.

7. Front structure (1) according to any one of Claims 1 to 6, further comprising a cradle structure (9) fixed under the stretcher (2) when the front structure is assembled on the vehicle, this cradle structure comprising two side rails (90) linked by a transverse element (91), each cradle side rail (90) having, at its front end (92), a cradle shock absorber (93), **characterized in that** at least one cradle shock absorber is extended laterally in the transverse direction by an outer cover (95) with open cross-section extending from an opposite side to a side facing the other cradle shock absorber, the opening (96) of which is closed by the assembly with the cradle shock absorber (93), the at least one extended cradle shock absorber (93) being situated on the same side of the front structure as the at least one extended stretcher shock absorber (5).

8. Front structure (1) according to any one of Claims 1 to 7, **characterized in that** the dimensions of each outer cover (10, 95) of an extended shock absorber, measured in a plane transversal to the longitudinal direction, are greater on the side of a front end than on the side of a rear end.

9. Motor vehicle comprising a front structure (1) according to any one of the preceding claims.
